(19) Europäisches Patentamt

European Patent Office

Office européen des brevets

(11) Veröffentlichungsnummer : **0 473 798 B1**

(12) **EUROPÄISCHE PATENTSCHRIFT**

(45) Veröffentlichungstag der Patentschrift :
**19.11.92 Patentblatt 92/47**

(21) Anmeldenummer : **90115188.6**

(22) Anmeldetag : **07.08.90**

(51) Int. Cl.⁵ : **B41M 5/165**, B41M 7/02, B41M 3/00

(54) **Verfahren zum Aufbringen von mit verdampfenden Substanzen gefüllten Mikrokapseln auf Trägermaterial.**

(43) Veröffentlichungstag der Anmeldung :
**11.03.92 Patentblatt 92/11**

(45) Bekanntmachung des Hinweises auf die Patenterteilung :
**19.11.92 Patentblatt 92/47**

(84) Benannte Vertragsstaaten :
**AT BE CH DE DK ES FR GB GR IT LI LU NL SE**

(56) Entgegenhaltungen :
**CH-A- 507 808
DE-A- 3 904 311
GB-A- 1 329 309
PATENT ABSTRACTS OF JAPAN vol. 8, no. 43
(M-279)(1480) 24 Februar 1984; JP-A-58 199187
(DAI NIPPON INSATSU KABUSHIKI KAIS-
HA)19 November 1983**

(73) Patentinhaber : **Wanfried-Druck Kalden GmbH
Postfach 1242
W-3442 Wanfried 1 (DE)**

(72) Erfinder : **Grein, Georg
Plouescastrasse 1
W-3442 Wandfried (DE)**
Erfinder : **Lessinger, Hans-Peter
Plesseweg 3
W-3442 Wanfried (DE)**

(74) Vertreter : **Jahn-Held, Wilhelm W. Dr.Dr.-Ing.
Dipl.-Chem.
Schöne Aussicht 8
W-3513 Staufenberg-Landwehrhagen (DE)**

## Beschreibung

Es ist bekannt, bei Raumtemperatur verdampfende Substanzen, wie Parfüme und andere Kosmetika, den Verbrauchern durch Ihre Dampfphase, wie durch ihre Duftnote, zu charakterisieren.

Es ist weiter bekannt, bei Raumtemperatur verdampfende Substanzen in Mikrokapseln zu immobilisieren und dadurch ihre Wirkung vor den Bedarfsfall zu verhindern.

Solche Mikrokapseln werden mit für sich bekannten Bindemitteln auf Trägermaterial fixiert und im Bedarfsfall durch Zerdrücken oder Zerreiben, vornehmlich mit der Hand, zur Wirkung gebracht, um dadurch eine Bewertung zu ermöglichen.

Soweit solche Mikrokapseln auf wenig oder nicht saugfähigem Untergrund des Trägermaterials als Oberfläche aufgebracht werden, ist die Bindung nach dem Stand der Technik nicht ausreichend. Die Mikrokapseln werden durch ihre zu geringen Bindung auf solchen Oberflächen bereits bei der Handhabung abgerieben. Sofern eine Teilmenge noch haften bleibt, wird diese beim Reiben zerstört und kann somit nur in einem Fall zur Wirkung gebracht werden. Die nur einmalige Duftwirkung ist jedoch für die Bewertung verdampfender Substanzen im allgemeinen nicht ausreichend.

Es muss dann auf die Originalsubstanz zurückgegriffen werden, was gerade vermieden werden soll. Dieser Nachteil soll gerade durch die Duftwirkung der Substanzen aus den zerdrückten Mikrokapseln vermieden werden.

Die schweizer Patentschrift 507.808 beschreibt das Aufbringen von einen flüssigen Kern enthaltenden, kleinen Kapseln auf einen Träger. Die Kapseldispersion wird direkt auf eine als Zwischenschicht bezeichnete Druckfarbe mit einem Harzbindemittel aufgetragen, die sich auf einem Träger befindet.

Sofern der Träger von der viskosen Kapseldispersion negativ beeinflusst wird, soll diese Zwischenschicht auf den ganzen Träger oder in Form eines Musters auf diesen aufgebracht werden.

Dieses Verfahren hat den Nachteil, dass verdampfende Stoffe aus dem Harzbindemittel in die Kapseldispersion eindringen und dadurch die Duftnote verfälschen.

Ein weiterer Nachteil besteht darin, dass die Haftung der Mikrokapseln nur an der Phasengrenze stattfindet und dadurch nur ein einmaliges Zerreiben zur Erzeugung der Duftnote aus den Kapseln möglich ist.

Ein weiterer Nachteil besteht darin, dass die Druckfarbe mit dem Harzbindemittel nur einen Druck gestattet.

Das japanische Patent 1.991.187 beschreibt das Aufbringen von Mikrokapseln direkt auf die Druckschicht (2) mittels Wirbelschicht (3). Auf der Rückseite der Druckschicht befindet sich eine Coatingschicht (5) und darauf ein Polyesterfilm (1).

Diese Patentschrift lehrt somit ebenso die Vermeidung einer isolierenden Zwischenschicht zwischem dem Trägermaterial und den Mikrokapseln.

Gegenstand des Verfahrens der Erfindung ist das Aufbringen von mit natürlichen oder synthetischen Duftstoffen gefüllten Mikrokapseln auf wenig oder nicht saugfähigem Trägermaterial.

Es ist die Aufgabe des Verfahrens der Erfindung, gefüllte Mikrokapseln auf Trägermaterial, insbesondere auf solches aus Kunststoffflächen, oder aus nicht oder nur wenig saugfähigem Material, handhabungsfest aber zerdrückbar aufzubringen, um dieses im Bedarfsfall durch Zerdrücken der Mikrokapseln in der vollen, oder in Teilmengen zur Wirkung zu bringen.

Die Lösung der Aufgabe der Erfindung ist im kennzeichnenden Teil des Anspruches 1 definiert.

Diese besteht darin, dass in bekannter Weise im Offset- oder Siebdruck- Verfahren bedrucktes Trägermaterial mit einem, mit Wasser verdünnbaren Wasserlack beschichtet wird, anschliessend die Mikrokapseln zusammen mit einem Bindemittel auf die isolierende Zwischenlackschicht aufgedruckt, aufgesprüht oder durch Eintauchen aufgebracht werden, und danach das mit den gefüllten Mikrokapseln beschichtete Trägermaterial getrocknet und auf das erforderliche Format geschnitten oder gestanzt wird.

Die Unteransprüche betreffen die alternative und bevorzugte Ausgestaltung des Verfahrens der Erfindung.

Unter Wasserlack, genannt auch Wasserkastenlack, wird ein in der Druckindustrie üblicher Lack aus einer Styrolacrylatdispersion verstanden.

Der technische Effekt des Verfahrens der Erfindung liegt in der überraschenden Feststellung, dass gefüllte Mikrokapseln nur dann auf Trägermaterial handhabungsfest haften, wenn sich auf diesem eine Zwischenchicht aus Wasserlack befindet. Es ist offenbar so, dass die mit Bindemitteln aufgebrachten Mikrokapseln aus organischem Material, insbesondere aus aushärtenden Polymeren, nur auf Wasserlack Haftkräfte durch einen Adsorptionseffekt bewirken und nicht auf glatten Oberflächen oder auf solchen, die kaum eine Saugfähigkeit für flüssige, wässrige Phasen aufweisen.

Das Verfahren der Erfindung wird beispielsweise wie folgt erläutert.

Auf eine Hart-PVC- Weissfolie von 0,5 mm Dicke wird ein Mehrfarbendruck im Offsetverfahren aufgebracht. Danach wird in derselben OffsetDruckmaschine aus einem Wasserkasten nach der Farbaufbringung die Oberfläche der Folie als Trägermaterial mit einem Wasserlack flächig oder partiell beschichtet. Dieser Lack ist ein mit Wasser verdünnbarer Hochglanzlack, Type Terrawet G 9/286 der Joachim Dyes Lackfabrik GmbH, Hannover.

Danach wird eine Duftmasse als slurry aus einem Gemisch aus 20 Gew.-% mit einem Duftstoff gefüllten Mikrokapseln und 80 % Wasser als Dispersion mit einem wasserlöslichen, transparenten, geruchsneutralen Bindemittel, wie Gummi arabicum, im Siebdruckverfahren aufgedruckt, und danach in einem Trockenkanal mit Warmluft von etwa 45°C getrocknet und auf ein Format geschnitten.

Diese Duftfolie gibt nach dem Anreiben an einzelnen Stellen zu unterschiedlichen Zeiten den Duft frei und gestattet dadurch die Bewertung dieses Parfüms ohne die Flasche öffnen zu müssen.

In einem anderen Ausführungsbeispiel wird das Bedrucken im Siebdruckverfahren und das Beschichten mit Klarlack in einer Lackiermaschine durchgeführt. Es wird ein Wasserlack aus Styrolacetat mit 2,5 bis 3,0 % Alkohol eingesetzt.

Das Verfahren der Erfindung gestattet durch seinen anderen konstruktiven Aufbau mit einer isolierenden Zwischenschicht den Mehrfarbendruck.
Das Verfahren der Erfindung führt dadurch zu Erzeugnissen mit erweitertem Anwendungsgebiet mit erheblicher Verbesserung der Qualität.

Das mit gefüllten Mikrokapseln verbundene Trägermaterial ist nach dem Verfahren der Erfindung handhabungsfest, aber dieses gestattet das Zerreiben oder Zerdrücken der Mikrokapseln. Das Verfahren der Erfindung verwendet für sich bekannte Bindemittel, die auch durch einfache Versuche zu ermitteln sind.

Das Verfahren der Erfindung bietet den Vorteil, dass verdampfende Substanzen in Mikrokapseln auf Trägermaterial einer grösseren Wertschätzung, wie auf Scheckkarten aus Kunststoff, als nicht saugfähiges Material, aufgebracht werden können.
Das Verfahren der Erfindung erweitert damit die Anwendungsbreite von verdampfenden Substanzen erheblich. Dieses schafft auch für die Praxis der Handhabung die erforderliche Sicherheit gegen vorzeitigen Abrieb und Bruch der Mikrokapseln und gestattet deren Öffnung durch Reibwirkung in ein oder mehrmaligen Bedarfsfall.

## Patentansprüche

1. Verfahren zum Aufbringen von mit natürlichen oder synthetischen Duftstoffen gefüllten Mikrokapseln auf wenig oder nicht saugfähigem Trägermaterial, dadurch gekennzeichnet, dass das in bekannter Weise im Offset- oder Siebdruck-Verfahren bedruckte Trägermaterial mit einem, mit Wasser verdünnbarem Wasserlack beschichtet wird, anschliessend die Mikrokapseln zusammen mit einem Bindemittel auf die isolierende Zwischenlackschicht aufgedruckt, aufgesprüht oder durch Eintauchen aufgebracht werden, und danach das mit den gefüllten Mikrokapseln beschichtete Trägermaterial getrocknet und auf das erforderliche Format geschnitten oder gestanzt wird.

2. Verfahren nach Anspruch 1, dadurch gekennzeichnet, dass als wenig oder nicht saugfähiges Trägermaterial matte oder glänzende Kunststoffflächen, Karton oder Papier eingesetzt werden.

3. Verfahren nach den Ansprüchen 1 und 2, dadurch gekennzeichnet, dass als wasserlösliches, transparentes geruchsneutrales Bindemittel Gummiarabikum eingesetzt wird.

4. Verfahren nach den Ansprüchen 1 bis 3, dadurch gekennzeichnet, dass als Wasserlack eine wässrige Dispersion von Styrolacrylat verwendet wird.

5. Verwendung des nach einem oder mehreren der Ansprüche hergestellten, mit gefüllten Mikrokapseln versehenen Trägermaterials für Verpackungen, Promotion - oder Bemusterumgsartikel oder für eine Meldefunktion.

## Claims

1. A method for applying microcapsules filled with natural or synthetic aromatic substances to carrier material which is not very absorbent or non-absorbent, characterised in that the carrier material which has been printed in known manner in an offset printing or screen printing process is coated with a water paint which can be diluted with water, then the microcapsules together with a binder are pressed on, sprayed on or applied by dipping to the insulating intermediate paint layer, and then the carrier material coated with the filled microcapsules is dried and cut or blanked to the required format.

2. A method according to Claim 1, characterised in that matt or gloss plastic surfaces, card or paper are used as the carrier material which is not very absorbent or non-absorbent.

3. A method according to Claims 1 and 2, characterised in that gum arabic is used as the water-soluble, transparent binder of neutral odour.

4. A method according to Claims 1 to 3, characterised in that an aqueous dispersion of styrene acrylate is used as the water paint.

5. The use of the carrier material provided with filled microcapsules and produced according to one or more of the Claims for packaging, promotional or sample articles or for an indicator function.

**Revendications**

1. Procédé d'application de microcapsules chargées de substances odoriférantes, naturelles ou synthétiques, sur un matériau de support peu ou pas absorbant, caractérisé en ce qu'on revêt, de manière en soi connue, le matériau de support imprimé par un procédé d'impression rotocalcographique ou sérigraphique, d'une laque ou encre aqueuse, diluable à l'eau, puis on applique les microcapsules, en même temps qu'un liant, sur la couche de laque intermédiaire, isolante, par impression, pluvérisation ou trempage et on sèche ensuite le matériau de support revêtu des microcapsules chargées et on l'amène au format voulu par découpe ou à l'emporte-pièce.

2. Procédé suivant la revendication 1, caractérisé en ce qu'à titre de matériau de support peu ou non absorbant, on utilise des surfaces en matières plastiques mates ou brillantes, du carton ou du papier.

3. Procédé suivant l'une quelconque des revendications 1 et 2, caractérisé en ce que l'on utilise de la gomme arabique à titre de liant soluble dans l'eau, transparent et d'odeur neutre.

4. Procédé suivant l'une des revendications 1 à 3, caractérisé en ce que l'on utilise une dispersion aqueuse d'acrylate de styrène à titre de laque à l'eau.

5. Utilisation du matériau de support pourvu de microcapsules chargées, fabriqué par mise en oeuvre du procédé suivant l'une quelconque des revendications précédentes, pour la confection d'emballages, d'articles de promotion ou d'échantillonnage, ou pour une fonction d'annonce ou publicitaire.